# EUROPEAN PATENT SPECIFICATION

(11) **EP 2 871 168 B1**
(45) Date of publication and mention of the grant of the patent: **21.12.2016**
(21) Application number: 13191704.9
(22) Date of filing: 06.11.2013
(51) Int. Cl.: C03C 3/089, C03C 8/02, C03C 8/14

(54) **Mass of silicate enamel coating on steel**
Masse aus Silikatemail-Beschichtung auf Stahl
Masse de revêtement en émail de silicate sur de l'acier

(43) Date of publication of application: 13.05.2015
(73) Proprietor: Rigas Tehniska universitate, Riga 1658 (LV)
(72) Inventor: Mezinskis, Gundars, 2137 Garkalne (LV); Bidermanis, Laimons, 1057 Riga (LV); Pavlovska, Ilona, 1067 Riga (LV); Cimmers, Andris, 1019 Riga (LV); Liepins, Janis, 5001 Ogre (LV); Malnieks, Kaspars, 5016 Rembate (LV); Gabrusenoks, Jevgenijs, 1067 Riga (LV)
(74) Representative: Fortuna, Jevgenijs

(56) References cited:
- LV-B- 13 021
- LV-B- 14 504
- LV-B- 14 646
- US-A- 4 150 191
- US-A- 5 421 877

## Description

### Tehnical field

The invention relates to the enamelling industry, in particular to the mass composition of the solar thermal low-reflective silicate enamel coating for chromium-nickel steel.

### Background Art

There is known a mass of black enamel coating with extended surface structure (LV14504), which provides a high thermal expansion and may be used for obtaining a low-reflectance solar silicate enamel coating on a chromium-nickel steel alloy. For the production of such coating large amounts of specially synthesized crystalliser - 30-70 parts by weight per 100 parts by weight of frit is to be introduced in mass composition. In addition, after melting-on of the last layer the product is to be cooled with the furnace, which significantly complicates the process of enamelling.

There is known a mass composition of black enamel coating with extended surface structure without crystalliser and with simplified enamel melting process (LV14646). The enamel coating based on this mass is characterized by the increased (above 30 %) reflection of the radiation in the range of wavelength 300-2500 nm, therefore the application of this known coating as solar radiation low reflective silicate enamel is not effective.

### Disclosure of the Invention

The aim of the invention is to develop a mass composition of enamel coating, which would ensure the reduced reflection in the range of 300-2500 nm radiation wavelength, and which would be suitable for obtaining on chromium-nickel steel alloy, which in its turn is characterized by the increased thermal expansion.

The set aim is achieved by composing of silicate enamel mass composition from enamel frit with high SiO₂ composition (83 % of mass, hereinafter referred to as the designation "K"), black pigment (jet black) of corundum-type structure (Cr, Fe)₂O₃, ground SiO₂ and by introducing CuO in the mass composition in the of of 20-30 parts by weight per 100 parts by weight of the frit. The corundum-type structure (Cr, Fe)₂O₃ black pigment has the following properties: density 4.9±0.6 g/cm³; granulometry - particles size: 45-55% of particles have diameter of 3±0.6 µm, while at least 95% of particles have diameter below 26 µm.

Enamel coating mass compositions and their characteristics are shown in Table 1. In the description of the invention and claims the components, which are necessary to set the enamel slips and stabilization (clay, bentonite, sodium nitrite, borax) are not calculated in the total mass of the composition, but additives of special-purpose (various refractory oxides, chamotte, phosphates, dyes, pigments, etc.), including enamel frit are calculated in the total mass of the composition. It should be noted that in case of present invention a low-reflective coating for radiation in the wavelength range between 300 and 2500 nm is meant.

The mass preparation and silicate enamel coating application process is as follows. Enamel frit is melted at a temperature of 1300-1350 °C, the melt is granulated in water. According to the mass prescription components (frit, SiO₂, said black pigment of corundum-type structure, CuO) are weighted by adding (wt.% of the frit weight): clay 6-8, NaNO₂ 0.4-0.6, they are mixed and a slip is prepared by adding water. A slip on the product is applied by the dip-coating method or by slip casting method, then dried and fired at a temperature of 950°C.

**Table 1.**

| Enamel coating compositions and their characteristics | | | | |
|---|---|---|---|---|
| **Enamel coating mass composition, parts by weight** | **Radiation wavelength ranges, nm** | | | |
| | ***300-400*** | ***400*-*700*** | ***700*-*2500*** | ***300*-*2500*** |
| | **Reflection (α) in the respective radiation wavelength range, %** | | | |
| Frit E - 100 | | | | |
| Corundum -type structure pigment - 5-20 | 3.26-5.28 | 4.11-6.65 | 41.31-56.90 | 34.52-47.66 |
| ground SiO₂- 30-70 | | | | |
| (prior art - LV14646) | | | | |
| Frit K - 100 | | | | |
| Corundum -type structure pigment - 50 | 5.69 | 4.80 | 7.46 | 7.01 |
| ground SiO₂- 70 | | | | |
| CuO - 30 | | | | |
| Frit K - 100 | 4.95 | 4.37 | 7.58 | 7.02 |
| Corundum -type structure pigment - 60 | | | | |
| ground SiO₂- 30, CuO - 20 | | | | |
| Frit K - 100 | | | | |
| Corundum -type structure pigment - 70 | 5.29 | 4.67 | 7.43 | 6.96 |
| ground SiO₂- 30 | | | | |
| CuO - 30 | | | | |

As it can be seen from the Table 1, the proposed silicate enamel coating mass composition, compared with the silicate enamel coating mass composition as set out in LV14646, provides for a reduced reflection in the radiation wavelength range 300-2500 nm (especially in the radiation wavelength range - 700-2500 nm).

Low-reflective coating (reflection below 10 %) is obtained, by introducing in mass composition CuO in the range 20-30 parts by weight per 100 parts by weight of frit at the following ratio of components (parts by weight): frit - 100, the above mentioned black pigment of corundum-type structure (Fe,Cr)₂O₃ - 50-70, ground SiO₂ - 30-70. The enamel frit containing (wt %): SiO₂ - 82-83, Li₂O - 5-6, B₂O₃ - 7-8, MnO - 3-4, CoO - 0.3-1. The enamel is melted at a temperature of 930-970 °C, the firing time depends on product weight.

Mentioned before enamel coating provides for a reduced reflectivity of 6.96 - 7.02 % in the range of radiation wavelength 300-2500 nm. Furthermore, the mass composition of the enamel coating provides for the ability of the high-power solar energy receiver tube's of the enamel coating to withstand prolonged high temperature corrosion (600 ° C for 3000 h).

The proposed coating mass composition can be, for example, used to obtain coating for solar collectors' materials, for water-heating equipment (for industrial purposes, water boilers, kettles and other equipment where heating element is placed in a steel tube), washing machines parts, for coating of inner part of steel pipes.

### Sources of information:

1. LV14504 B.
2. LV 14646 B.
3. L.Bragina, O. Shaligina, N. Kuryakin, a.o. Powder electrostatic enamelling of household appliances. IOP Conf. Series: Materials Science and Engineering 25 (2011) 012012 doi:10.1088/1757-899X/25/1/012012
4. User manual - Steel for enamelling and enamelled steel - ArcelorMittal. http://www.constructalia.com/repository/transfer/en/05586049ENLACE_PDF.pdf
5. I.G. Berdzenishvili. Functional Corrosion-Resistant Enamel Coatings and Their Adherence Strength. Proceedings of the International Congress on Advances in Applied Physics and Materials Science, Antalya 2011.P 178-180.

## Claims

1. A mass for obtaining solar radiation low-reflectance silicate enamel coating on steel alloy, comprising enamel frit, pigment and ground SiO₂, **characterized in that** the mass composition further comprises CuO in the range of 20-30 parts by weight per 100 parts by weight of frit, at the following ratio of components, parts by weight:
an enamel frit - 100,
black pigment of corundum -type structure (Cr, Fe)₂O₃ - 50-70,
ground SiO₂ - 30-70,
CuO - 20-30.

2. The mass according to claim 1, **characterized in that** the enamel frit contains the following ratio of components, weight %: SiO₂ - from 82 to 83, Li₂O - from 5 to 6, B₂O₃ - from 7 to 8, MnO - from 3 to 4, CoO - from 0.3 to 1.

3. Article of steel, coated with silicate enamel coating obtained on alloyed steel by the following: (i) melting enamel frit according to claim 2 at a temperature of 1300-1350°C, (ii) granulating the resulting melt in water, (iii) weighting mass components according to claim 1, (iv) adding clay 6-8 wt.% of frit weight, and NaNO₂ 0.4-0.6 wt.% of frit weight, (v) mixing the resulting mass and preparing slip, by adding water, (vi) applying a slip on the article of steel product, drying and firing.

## Patentansprüche

1. Eine Masse zum Erzielen einer die Sonnenstrahlung reflektierenden Silikatlackbeschichtung auf Stahllegierung, bestehend aus einer Schmelzmasse, Pigment und geschliffenem SiO₂, **dadurch gekennzeichnet, dass** die Massezusammensetzung ferner CuO im Ausmaß von 20-30 Gewichtsteilen pro 100 Gewichtsteile der Fritte enthält, mit folgendem Verhältnis der Komponenten und Gewichtsteilen:
Schmelzfritte - 100,
Schwarzes Pigment aus Korundstruktur (Cr, Fe)₂O₃ - 50-70,
Geschliffenes SiO₂ - 30-70
CuO - 20-30.

2. Die Masse nach Anspruch 1, ist **dadurch gekennzeichnet, daß** die Schmelzfritte das folgende Verhältnis der Komponenten mit folgenden Gewichtsprozenten enthält: SiO₂ - von 82 bis 83, Li₂O - von 5 bis 6, B₂O₃ - von 7 bis 8, MnO - von 3 bis 4, CoO - von 0,3 bis 1.

3. Stahlgegenstand, beschichtet mit Silikatlack auf legiertem Stahl durch: (i) Schmelzfritte nach Anspruch 2 bei einer Temperatur von 1300-1350 °C, (ii) Granulieren der resultierenden Schmelze in Wasser, (iii) Gewichtsmasse der Komponenten gemäß Anspruch 1, (iv) Zugabe von Ton mit 6-8 Gew % des Frittengewichts und NaNO₂ 0,4-0,6 Gew.-% des Frittengewichts, (v) Mischen der resultierenden Masse und Herstellung des Schlicks durch Zugabe von Wasser, (vi) Auftragen des Schlicks auf den Gegenstand aus Stahlprodukt, Trocknen und Brennen.

## Revendications

1. Masse permettant d'obtenir un revêtement d'émail de silicate à faible réflectance de rayonnement solaire sur un alliage d'acier, comprenant une fritte d'émail, un pigment et du SiO₂ broyé, **caractérisée en ce que** la composition de la masse comprend en outre du CuO dans la plage de 20 à 30 parties en poids pour 100 parties en poids de fritte, au rapport suivant de composants, en parties en poids :
une fritte d'émail - 100,
pigment noir de structure de type corindon (Cr, Fe)₂O₃ - 50-70,
SiO₂ broyé - 30-70,
CuO - 20-30.

2. Masse selon la revendication 1, **caractérisé en ce que** la fritte d'émail contient le rapport suivant de composants, en % en poids : SiO₂ - de 82 à 83, Li₂O - de 5 à 6, B₂O₃ - de 7 à 8, MnO - de 3 à 4, CoO - de 0,3 à 1.

3. Article en acier, revêtu d'un revêtement d'émail de silicate obtenu sur un acier allié par ce qui suit : (i) fusion d'une fritte d'émail selon la revendication 2 à une température de 1300 à 1350 °C, (ii) granulation du produit fondu résultant dans de l'eau, (iii) pesée des composants de masse selon la revendication 1, (iv) ajout d'argile à 6 à 8 % en poids de poids de fritte, et de NaNO₂ à 0,4 à 0,6 % en poids du poids de fritte, (v) mélange de la masse résultante et préparation d'une barbotine, en ajoutant de l'eau, (vi) application d'une barbotine sur l'article de produit en acier, séchage et cuisson.
